(19) Europäisches Patentamt / European Patent Office / Office européen des brevets

(11) **EP 3 499 431 B1**

(12) **FASCICULE DE BREVET EUROPEEN**

(45) Date de publication et mention
de la délivrance du brevet:
**30.03.2022 Bulletin 2022/13**

(21) Numéro de dépôt: **18212472.7**

(22) Date de dépôt: **13.12.2018**

(51) Classification Internationale des Brevets (IPC):
**G06N 3/00** *(2006.01)* **G06F 1/324** *(2019.01)*
**G06F 1/3296** *(2019.01)* **G06N 20/00** *(2019.01)*
**G06F 1/3206** *(2019.01)*

(52) Classification Coopérative des Brevets (CPC):
**G06F 1/3296; G06F 1/3206; G06F 1/324;
G06N 3/006; G06N 20/00;** Y02D 10/00

(54) **DISPOSITIF ÉLECTRONIQUE DE TRAITEMENT DE SIGNAUX À OPTIMISATION INTÉGRÉE DE CONSOMMATION D'ÉNERGIE ÉLECTRIQUE ET PROCÉDÉ CORRESPONDANT**

ELEKTRONISCHE VORRICHTUNG ZUR SIGNALVERARBEITUNG MIT INTEGRIERTER OPTIMIERUNG DES STROMVERBRAUCHS, UND ENTSPRECHENDES VERFAHREN

ELECTRONIC DEVICE FOR PROCESSING SIGNALS WITH BUILT-IN OPTIMISATION OF ELECTRIC ENERGY CONSUMPTION AND CORRESPONDING METHOD

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **15.12.2017 FR 1762299**

(43) Date de publication de la demande:
**19.06.2019 Bulletin 2019/25**

(73) Titulaire: **Commissariat à l'Énergie Atomique
et aux Énergies Alternatives
75015 Paris cedex (FR)**

(72) Inventeur: **MOLNOS, Anca
38000 Grenoble (FR)**

(74) Mandataire: **Bonnet, Michel
Cabinet Bonnet
93, rue Réaumur
75002 Paris (FR)**

(56) Documents cités:
- **A. MOLNOS ET AL: "Investigation of Q-learning applied to DVFS management of a System-on-Chip", IFAC-PAPERSONLINE, vol. 49, no. 5, 1 janvier 2016 (2016-01-01), pages 278-284, XP055502281, ISSN: 2405-8963, DOI: 10.1016/j.ifacol.2016.07.126**
- **MANN T A ET AL: "Scaling Up Reinforcement Learning through Targeted Exploration", AAAI-11/IAAI-11, SAN FRANCISCO, USA, AAAI, SAN FRANCISCO, CA, USA, 7 août 2011 (2011-08-07), page 435, XP001565817, ISBN: 978-1-57735-507-6**
- **THOMAS DEAN ET AL: "Planning under time constraints in stochastic domains", ARTIFICIAL INTELLIGENCE., vol. 76, no. 1-2, 1 juillet 1995 (1995-07-01), pages 35-74, XP055502978, NL ISSN: 0004-3702, DOI: 10.1016/0004-3702(94)00086-G**
- **CHANG-HSIAN UANG ET AL: "Self-Organizing Reinforcement Learning Model", 19 March 2012 (2012-03-19), ANNUAL INTERNATIONAL CONFERENCE ON THE THEORY AND APPLICATIONS OF CRYPTOGRAPHIC TECHNIQUES, EUROCRYPT 2018; [LECTURE NOTES IN COMPUTER SCIENCE; LECT.NOTES COMPUTER], SPRINGER, BERLIN, HEIDELBERG, PAGE(S) 218 - 227, XP019174304, ISBN: 978-3-642-17318-9**

**Description**

La présente invention concerne un dispositif électronique de traitement de signaux à optimisation intégrée de consommation d'énergie électrique. Elle concerne également un procédé d'optimisation de consommation d'énergie électrique d'un tel dispositif.

Elle s'applique notamment aux dispositifs électroniques à calculs embarqués de type circuit intégré, système sur puce SoC (de l'anglais « System on Chip »), unité centrale ou graphique de traitement, ou plus généralement aux ordinateurs et aux serveurs de réseaux d'ordinateurs interconnectés, lorsqu'ils comportent :

- au moins un capteur conçu pour mesurer, à chacun d'une pluralité d'instants successifs, une valeur d'un état du dispositif électronique,
- au moins un actionneur conçu pour régler, à chacun de la pluralité d'instants successifs, une valeur d'une action sur le dispositif électronique, et
- un bloc matériel de traitement de signaux comportant un gestionnaire de consommation d'énergie électrique.

De nombreux dispositifs électroniques, et en particulier ceux à calculs embarqués, présentent aujourd'hui des possibilités de réglage automatique ou semi-automatique de points de fonctionnement optimisant conjointement la consommation d'énergie électrique et les capacités de calculs par compromis. De tels points de fonctionnement sont par exemple des actions agissant sur le dispositif électronique en termes de tension d'alimentation et de fréquence d'horloge, notamment lorsque ce dispositif est de type DVFS (de l'anglais « Dynamic Voltage and Frequency Scaling »), c'est-à-dire à ajustement dynamique de tension et de fréquence. Ils peuvent aussi porter sur des actions de sélection instantanée d'un mode de performance parmi plusieurs modes tels que : sommeil profond, sommeil, faible puissance, haute performance, etc. Ils réalisent le compromis trouvé automatiquement par le gestionnaire de consommation d'énergie électrique entre consommation (minimisation de la consommation d'énergie électrique, minimisation de l'usure des composants, ...) et performances (maximisation des capacités de calculs, respect des contraintes de débits en sortie, évitement des points chauds, ...). Améliorer la simplicité et l'efficacité d'un tel gestionnaire est un problème techniquement difficile mais important à résoudre.

La principale difficulté est de s'adapter constamment aux variations de charge de travail imposée aux applications qui s'exécutent sur les dispositifs électroniques. En effet, les traitements qu'elles réalisent sont fortement corrélés aux données et hautement dynamiques. Un certain nombre de solutions proposées dans l'état de la technique dépendent de modèles qui doivent être définis le plus précisément possible malgré le caractère non stationnaire de ces traitements. Il en résulte que les solutions trouvées sont soit approximatives (modèles simples), soit complexes (modèles sophistiqués). Selon d'autres solutions qui proposent de résoudre le problème d'adaptabilité dynamique sans nécessiter de modèle préalable, le gestionnaire de consommation d'énergie électrique est à moteur d'apprentissage, c'est-à-dire à moyens logiciels et/ou matériels d'apprentissage dynamique de ces variations de charge de travail. Ces autres solutions sont mieux adaptées aux environnements dynamiques.

Parmi les solutions sans modèle préalable, certaines proposent une méthode d'apprentissage par renforcement permettant une commande adaptative indirecte des actions d'optimisation à mener dynamiquement sur le dispositif électronique. L'invention s'applique plus particulièrement à un dispositif implémentant une telle méthode. C'est ainsi le cas de ce qui est divulgué dans l'article de Molnos et al, intitulé « Investigation of Q-learning applied to DVFS management of a System-on-Chip », publié dans IFAC-PapersOnLine 49-5, pages 278 à 284, en 2016. Selon cet enseignement, un dispositif électronique de traitement de signaux à optimisation intégrée de consommation d'énergie électrique doit en outre comporter :

- un bloc matériel de stockage de signaux et données, comportant au moins une table de correspondance qui, pour chaque paire formée d'une valeur parmi plusieurs valeurs prédéterminées possibles de l'état mesurable et d'une valeur parmi plusieurs valeurs prédéterminées possibles de l'action réglable, attribue au moins une valeur représentative d'une optimisation de la consommation d'énergie électrique, dite valeur de qualité,
- un moteur d'apprentissage par renforcement conçu pour, à chacun de la pluralité d'instants successifs de mesure et de réglage, sur la base de l'état mesuré :

  • mettre à jour au moins une valeur de qualité dans chaque table de correspondance, en fonction de cet état mesuré et de l'action de l'instant précédent qui a mené à cet état mesuré,
  • choisir sélectivement entre une exploitation de valeurs de qualité mises à jour et une exploration aléatoire dans chaque table de correspondance, l'exploration aléatoire étant définie comme la sélection aléatoire d'une valeur d'action dans chaque table de correspondance,
  • sélectionner une nouvelle action en fonction d'un résultat de l'exploitation ou de l'exploration, et
  • transmettre la valeur de cette nouvelle action audit au moins un actionneur pour réglage.

L'exploration est en particulier essentielle dans ce type de dispositif et doit être continue. Elle permet de diminuer le risque de converger vers une optimisation locale mais elle est susceptible également de fortement ralentir la convergence vers l'optimisation globale souhaitée. En pratique, il est par exemple généralement nécessaire d'explorer plusieurs fois l'intégralité de la ou des tables de correspondance pour éviter les optimisations locales et converger vers l'optimisation globale, conformément à une approche ε-gloutonne (de l'anglais « ε-greedy ») généralement choisie. Des paramètres de la mise à jour des valeurs de qualité peuvent également être réglés dans le moteur d'apprentissage pour optimiser la convergence, tels qu'un taux d'apprentissage (de l'anglais « learning rate ») ou un facteur de réduction (de l'anglais « discount factor ») généralement prédéfinis entre 0 et 1 dans une équation de mise à jour par récurrence. Mais l'expérience montre que ces paramètres sont très difficiles à régler. De même, l'initialisation de la ou des tables de correspondance est délicate et à fort impact sur la convergence.

Il peut ainsi être souhaité de prévoir un dispositif électronique de traitement de signaux à optimisation intégrée de consommation d'énergie électrique qui permette de s'affranchir d'au moins une partie des problèmes et contraintes précités.

Il est donc proposé un dispositif électronique de traitement de signaux à optimisation intégrée de consommation d'énergie électrique, comportant :

- au moins un capteur conçu pour mesurer, à chacun d'une pluralité d'instants successifs, une valeur d'un état du dispositif électronique,
- au moins un actionneur conçu pour régler, à chacun de la pluralité d'instants successifs, une valeur d'une action sur le dispositif électronique,
- un bloc matériel de stockage de signaux et données, comportant au moins une table de correspondance qui, pour chaque paire formée d'une valeur parmi plusieurs valeurs prédéterminées possibles de l'état mesurable et d'une valeur parmi plusieurs valeurs prédéterminées possibles de l'action réglable, attribue au moins une valeur représentative d'une optimisation de la consommation d'énergie électrique, dite valeur de qualité,
- un bloc matériel de traitement de signaux, comportant un gestionnaire de consommation d'énergie électrique à moteur d'apprentissage par renforcement conçu pour, à chacun de la pluralité d'instants successifs, sur la base de l'état mesuré :

  • mettre à jour au moins une valeur de qualité dans chaque table de correspondance, en fonction de cet état mesuré et de l'action de l'instant précédent qui a mené à cet état mesuré,
  • choisir sélectivement entre une exploitation de valeurs de qualité mises à jour et une exploration aléatoire dans chaque table de correspondance, l'exploration aléatoire étant définie comme la sélection aléatoire d'une valeur d'action dans chaque table de correspondance, selon un paramètre statistique exprimant un taux d'explorations aléatoires à effectuer dans la pluralité d'instants successifs et un taux complémentaire à 1 d'exploitations à effectuer dans la même pluralité d'instants successifs,
  • sélectionner une nouvelle action en fonction d'un résultat de l'exploitation ou de l'exploration, et
  • transmettre la valeur de cette nouvelle action audit au moins un actionneur pour réglage,

dans lequel le moteur d'apprentissage par renforcement présente un paramètre de limitation de l'exploration aléatoire qui s'applique lors de son exécution si elle est sélectionnée, c'est-à-dire avant la sélection d'une nouvelle action en fonction du résultat de l'exploitation ou de l'exploration, comportant une valeur de distance exploratoire dans chaque table de correspondance, autour d'une valeur d'action pré-sélectionnable dans chaque table de correspondance, au-delà de laquelle une valeur d'action ne peut pas être sélectionnée par exploration aléatoire.

Ainsi, l'exploration aléatoire est limitée de sorte qu'elle freine moins la convergence que dans l'état de la technique précité, tout en pouvant rester continûment sollicitée. Il a en outre été remarqué que la façon dont cette limitation est proposée, c'est-à-dire par un paramètre de distance dans chaque table de correspondance, n'est pas particulièrement pénalisante en termes de recherche d'une optimisation globale puisqu'il s'avère finalement que, dans ce contexte d'apprentissage par renforcement, lorsqu'une optimisation est globale dans un certain voisinage correctement défini par la valeur de distance exploratoire, alors elle a de fortes chances d'être globale à l'échelle de la table de correspondance elle-même. Il a de plus été remarqué que l'apport de cette limitation en distance dans l'exploration permet de relativiser la difficulté de réglage des autres paramètres tels que le taux d'apprentissage et le facteur de réduction ou la sensibilité de l'initialisation de la ou des tables de correspondance. Il en résulte finalement une meilleure convergence pour de meilleurs résultats à l'aide d'une solution peu coûteuse en calculs.

De façon optionnelle :

- ledit au moins un capteur est conçu pour mesurer, à chacun de la pluralité d'instants successifs, au moins une valeur scalaire d'au moins une grandeur physique mesurable du dispositif électronique, ladite au moins une valeur scalaire formant la valeur de l'état du dispositif électronique,

- ledit au moins un actionneur est conçu pour régler, à chacun de la pluralité d'instants successifs, au moins une valeur scalaire d'au moins un paramètre de fonctionnement du dispositif électronique, ladite au moins une valeur scalaire formant la valeur de l'action sur le dispositif électronique,
- chaque table de correspondance établit une correspondance entre lesdites valeurs prédéterminés possibles de l'état mesurable et plusieurs valeurs scalaires prédéterminées possibles portant sur l'un dudit au moins un paramètre de fonctionnement pour l'attribution d'une valeur scalaire de qualité à chaque couple constitué d'une valeur prédéterminé possible de l'état mesurable et d'une valeur scalaire prédéterminée possible de l'un dudit au moins un paramètre de fonctionnement,
- l'exploration aléatoire est définie comme la sélection aléatoire d'une valeur scalaire de chaque paramètre de fonctionnement dans chaque table de correspondance, et
- pour chaque table de correspondance, la valeur de distance exploratoire est définie autour d'une valeur scalaire pré-sélectionnable du paramètre de fonctionnement correspondant, au-delà de laquelle une valeur scalaire de paramètre de fonctionnement ne peut pas être sélectionnée par exploration aléatoire.

De façon optionnelle également, les valeurs prédéterminées possibles de l'état mesurable sont ordonnées dans chaque table de correspondance par ordre croissant ou décroissant de valeurs scalaires prédéterminées possibles de l'une des grandeurs physiques mesurables, et les valeurs scalaires prédéterminées possibles portant sur chacun dudit au moins un paramètre de fonctionnement sont respectivement ordonnées dans chaque table de correspondance par ordre croissant ou décroissant de leur effet sur lesdites valeurs scalaires prédéterminées possibles de l'une des grandeurs physiques mesurables.

De façon optionnelle également, les valeurs scalaires prédéterminées possibles portant sur chacun dudit au moins un paramètre de fonctionnement sont respectivement ordonnées dans chaque table de correspondance par ordre croissant ou décroissant et ont un effet monotone sur lesdites valeurs scalaires prédéterminées possibles de l'une des grandeurs physiques mesurables.

De façon optionnelle également, la valeur de distance exploratoire de chaque table de correspondance est exprimée en nombre de lignes ou colonnes adjacentes dans cette table de correspondance selon que les valeurs prédéterminées possibles de l'action réglable dans cette table de correspondance sont ordonnées en lignes ou en colonnes.

De façon optionnelle également, ledit au moins un capteur comporte au moins l'un des éléments de l'ensemble constitué de :

- un compteur de métrique de performance d'au moins un processeur du bloc matériel de traitement de signaux,
- un capteur de température,
- un voltmètre disposé pour la mesure d'une tension d'alimentation,
- un détecteur de taux de remplissage de mémoires tampons d'entrée/sortie d'au moins un processeur du bloc matériel de traitement de signaux,
- un capteur de fréquence d'horloge d'au moins un processeur du bloc matériel de traitement de signaux, et
- un capteur de débit de sortie de messages du dispositif électronique.

De façon optionnelle également, ledit au moins un actionneur comporte au moins l'un des éléments de l'ensemble constitué de :

- un dispositif de réglage de puissance d'un module de refroidissement du dispositif électronique,
- un dispositif de réglage de fréquence d'horloge d'au moins un processeur du bloc matériel de traitement de signaux, et
- un dispositif de réglage d'une tension d'alimentation du dispositif électronique.

Il est également proposé un procédé d'optimisation d'une consommation d'énergie électrique d'un dispositif électronique de traitement de signaux, comportant les étapes suivantes :

- mesurer à l'aide d'au moins un capteur, à chacun d'une pluralité d'instants successifs, une valeur d'un état du dispositif électronique,
- régler à l'aide d'au moins un actionneur, à chacun de la pluralité d'instants successifs, une valeur d'une action sur le dispositif électronique,
- stocker, dans un bloc matériel de stockage de signaux et données du dispositif électronique, au moins une table de correspondance qui, pour chaque paire formée d'une valeur parmi plusieurs valeurs prédéterminées possibles de l'état mesurable et d'une valeur parmi plusieurs valeurs prédéterminées possibles de l'action réglable, attribue au moins une valeur représentative d'une optimisation de la consommation d'énergie électrique, dite valeur de qualité,

- à chacun de la pluralité d'instants successifs et sur la base de l'état mesuré, activer un moteur d'apprentissage par renforcement d'un gestionnaire de consommation d'énergie électrique d'un bloc matériel de traitement de signaux du dispositif électronique, pour :

   • mettre à jour au moins une valeur de qualité dans chaque table de correspondance, en fonction de cet état mesuré et de l'action de l'instant précédent qui a mené à cet état mesuré,
   • choisir sélectivement entre une exploitation de valeurs de qualité mises à jour et une exploration aléatoire dans chaque table de correspondance, l'exploration aléatoire étant définie comme la sélection aléatoire d'une valeur d'action dans chaque table de correspondance, selon un paramètre statistique exprimant un taux d'explorations aléatoires à effectuer dans la pluralité d'instants successifs et un taux complémentaire à 1 d'exploitations à effectuer dans la même pluralité d'instants successifs,
   • sélectionner une nouvelle action en fonction d'un résultat de l'exploitation ou de l'exploration, et
   • transmettre la valeur de cette nouvelle action audit au moins un actionneur pour réglage,

dans lequel, lorsque l'exploration aléatoire est sélectionnée, elle est limitée par un paramètre du moteur d'apprentissage par renforcement lors de son exécution, c'est-à-dire avant la sélection d'une nouvelle action en fonction du résultat de l'exploitation ou de l'exploration, ce paramètre comportant une valeur de distance exploratoire dans chaque table de correspondance, autour d'une valeur d'action pré-sélectionnable dans chaque table de correspondance, au-delà de laquelle une valeur d'action ne peut pas être sélectionnée par exploration aléatoire.

De façon optionnelle, le paramètre à valeur de distance exploratoire est réglable dynamiquement en cours d'exécution du moteur d'apprentissage par renforcement de manière à augmenter la distance exploratoire dans chaque table de correspondance au fil des instants successifs pendant qu'un paramètre de taux d'apprentissage de la mise à jour (110) décroît, cette augmentation graduelle étant en revanche stoppée si, au cours de plusieurs explorations aléatoires successives, il n'est pas trouvé de valeur de qualité supérieure à celle qui peut être déterminée par exploitation et autour de laquelle se font les explorations aléatoires successives.

De façon optionnelle également, la valeur d'action pré-sélectionnable dans chaque table de correspondance pour une exécution de l'exploration aléatoire est associée à une valeur maximale des valeurs de qualité résultant de la mise à jour dans cette table de correspondance.

L'invention sera mieux comprise à l'aide de la description qui va suivre, donnée uniquement à titre d'exemple et faite en se référant aux dessins annexés dans lesquels :

- la figure 1 représente schématiquement la structure générale d'un dispositif électronique de traitement de signaux à optimisation intégrée de consommation d'énergie électrique, selon un mode de réalisation de l'invention,
- la figure 2 illustre un exemple de stratégie d'exploration aléatoire mise en œuvre par un moteur d'apprentissage d'un gestionnaire de consommation d'énergie électrique du dispositif de la figure 1, et
- la figure 3 illustre les étapes successives d'un procédé d'optimisation de consommation d'énergie électrique, tel que pouvant être mis en œuvre par le dispositif de la figure 1.

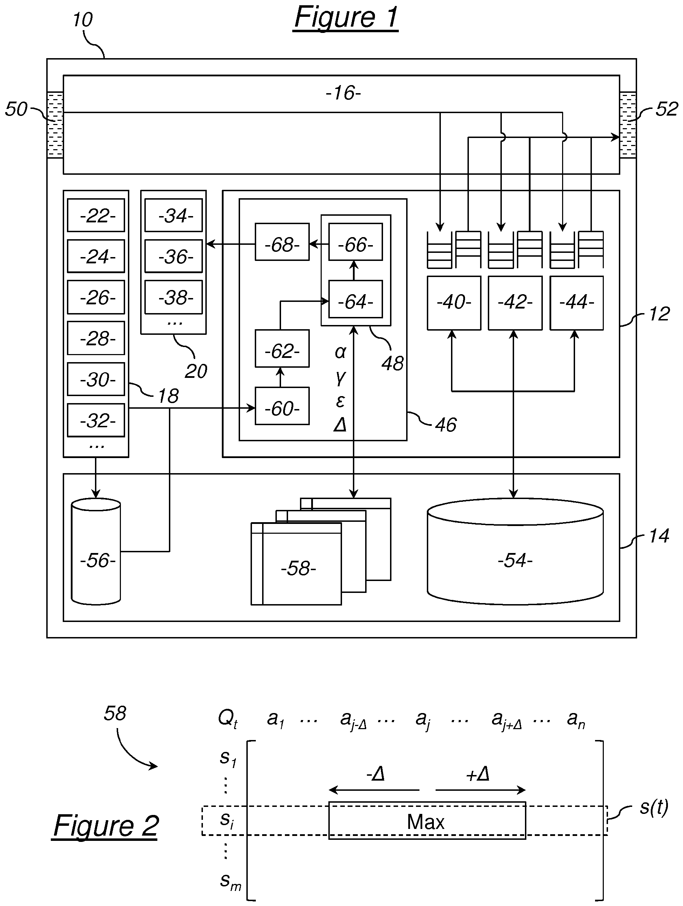

Le dispositif électronique 10 de traitement de signaux illustré schématiquement sur la figure 1 comporte fonctionnellement une unité de calcul 12 matérialisée par un bloc matériel de traitement de signaux, au moins une mémoire 14 matérialisée par un bloc matériel de stockage de signaux et données, une interface 16 d'entrée/sortie de signaux à traiter ou traités par l'unité de calcul 12, un ensemble 18 de capteurs conçus pour mesurer, à chacun d'une pluralité d'instants successifs, une valeur d'un état du dispositif électronique 10, et un ensemble 20 d'actionneurs conçus pour régler, à chacun de la pluralité d'instants successifs, une valeur d'une action sur le dispositif électronique 10. Cette représentation fonctionnelle ne préjuge pas de l'architecture concrète du dispositif électronique 10. En particulier, les éléments fonctionnels précités peuvent au moins en partie communiquer entre eux par l'intermédiaire d'un ou plusieurs bus de transmission de données (non représentés), être distribués selon une architecture en système ou réseau sur puce SoC/NoC (de l'anglais « System/Network on Chip »), ou toute autre architecture connue pour des dispositifs électroniques de traitement de données au sens large. Notamment, le dispositif électronique 10 peut être un dispositif à calculs embarqués de type circuit intégré, système sur puce SoC, unité centrale ou graphique de traitement, ou plus généralement un ordinateur quelconque ou même un serveur d'un réseau d'ordinateurs interconnectés.

Conformément à la présente invention, l'ensemble 18 comporte au moins un capteur, chacun dédié à la mesure d'au moins une valeur scalaire d'au moins une grandeur physique mesurable du dispositif électronique 10. Comme illustré sur la figure 1, il en comporte par exemple six parmi lesquels :

- un compteur 22 de métrique de performance d'au moins un processeur de l'unité de calcul 12 : il est par exemple connu de mesurer les variations scalaires d'une grandeur physique telle qu'un nombre d'instructions par cycle d'horloge ou par seconde ;

- un capteur 24 de température pour mesurer les variations scalaires en température d'au moins une partie des composants de l'unité de calcul 12 : ces composants sont en effet susceptibles de monter rapidement en température lorsqu'ils sont trop sollicités et doivent généralement être refroidis par des radiateurs ou ventilateurs intégrés ;
- un voltmètre 26 disposé pour la mesure d'une tension d'alimentation d'au moins une partie des composants du dispositif 10 : les variations scalaires de cette tension peuvent être mesurées au plus près de l'alimentation électrique du dispositif 10 ;
- un détecteur 28 de taux de remplissage de mémoires tampons d'entrée/sortie d'au moins un processeur de l'unité de calcul 12 : cette mesure peut être globale, ou locale (i.e. pour chaque processeur) et porte sur les variations scalaires de ce taux de remplissage ;
- un capteur 30 de fréquence d'horloge d'au moins un processeur de l'unité de calcul 12 : cette mesure des variations scalaires en fréquence temporelle peut également être globale pour l'unité de calcul 12, ou propre à chaque processeur ; et
- un capteur 32 de débit de sortie de messages du dispositif électronique 10 : cette mesure des variations scalaires de débit est effectuée au niveau de l'interface d'entrée/sortie 16.

Cette liste n'est bien sûr pas exhaustive. Quoi qu'il en soit, le nombre d'instructions par cycle d'horloge ou par seconde, la température, la tension d'alimentation, le taux de remplissage de mémoires tampons, la fréquence d'horloge et le débit de sortie constituent bien des grandeurs physiques mesurables du dispositif électronique 10. L'ensemble des valeurs scalaires ainsi mesurées à chaque instant forme la valeur, dans ce cas vectorielle, de l'état du dispositif électronique 10 à cet instant.

Conformément à la présente invention, l'ensemble 20 comporte au moins un actionneur, chacun dédié au réglage d'au moins une valeur scalaire d'au moins un paramètre de fonctionnement du dispositif électronique 10. Comme illustré sur la figure 1, il en comporte par exemple trois parmi lesquels :

- un dispositif 34 de réglage de la puissance d'un module de refroidissement du dispositif électronique 10, par exemple un radiateur ou ventilateur intégré comme indiqué précédemment en relation avec la mesure de température : ce dispositif 34 permet par exemple de régler la valeur scalaire instantanée de puissance du module de refroidissement et peut être intégré au module de refroidissement lui-même ;
- un dispositif 36 de réglage de fréquence d'horloge d'au moins un processeur du bloc matériel de traitement de signaux : il peut s'agir d'une horloge commune à tous les processeurs de l'unité de calcul 12 ou d'horloges propres aux processeurs ; et
- un dispositif 38 de réglage d'une tension d'alimentation d'au moins une partie des composants du dispositif 10 : ce dispositif 38 permet par exemple de régler la valeur scalaire instantanée de tension de l'alimentation électrique et peut être intégré à l'alimentation électrique elle-même.

Cette liste n'est bien sûr pas exhaustive. Quoi qu'il en soit, la puissance du module de refroidissement, la fréquence d'horloge et la tension d'alimentation constituent bien des paramètres de fonctionnement du dispositif électronique 10. L'ensemble des valeurs scalaires ainsi réglées à chaque instant forme la valeur, dans ce cas vectorielle, de l'action sur le dispositif électronique 10 à cet instant.

On notera également qu'au moins une partie des paramètres de fonctionnement du dispositif électronique 10 peut être fortement corrélée, voire identique, à certaines des grandeurs physiques mesurables. Par exemple, la puissance du module de refroidissement réglée par le dispositif 34 agit directement sur la température mesurée par le capteur 24. De même, la fréquence d'horloge sur laquelle on agit à l'aide du dispositif 36 peut être précisément celle que l'on souhaite mesurer à l'aide du capteur 30. De même, la tension d'alimentation sur laquelle on agit à l'aide du dispositif 38 peut être précisément celle que l'on souhaite mesurer à l'aide du voltmètre 26. Pour autant, il convient de ne pas confondre les capteurs et les actionneurs, les premiers effectuant des mesures sur des grandeurs physiques dont les valeurs instantanées résultent, directement ou indirectement, des réglages effectués par les seconds.

L'unité de calcul 12 comporte des processeurs, dédiés ou génériques, aptes à exécuter des traitements micro programmés ou micro câblés sur des signaux fournis par l'interface d'entrée/sortie 16. La figure 1 en illustre trois, portant les références 40, 42 et 44, mais il ne s'agit que d'un exemple purement illustratif. Chacun de ces trois processeurs présente une mémoire tampon d'arrivée de signaux à traiter fournis par l'interface d'entrée/sortie 16 et une mémoire tampon de sortie de signaux traités à destination de l'interface d'entrée/sortie 16.

Conformément à la présente invention, l'unité de calcul 12 comporte en outre un gestionnaire 46 de consommation d'énergie électrique à moteur 48 d'apprentissage par renforcement. Un tel gestionnaire 46 peut prendre la forme d'un module matériel de traitement, tel qu'un processeur du même type que les autres processeurs 40, 42, 44. Il est conçu, c'est-à-dire micro programmé ou micro câblé, pour recevoir à chaque instant d'une pluralité d'instants successifs, la valeur d'état du dispositif électronique 10 mesurée par les capteurs 22, 24, 26, 28, 30, 32 et pour transmettre, à chacun de ces instants également, la valeur de réglage des actionneurs 34, 36, 38, avec un objectif d'optimisation de la consommation d'énergie électrique par le dispositif électronique 10 grâce à cette action continue.

L'interface d'entrée/sortie 16 présente un port d'entrée 50 pour la réception de signaux à traiter provenant de l'extérieur du dispositif électronique 10. Ces signaux sont orientés vers les mémoires tampons d'arrivée des processeurs 40, 42, 44. L'interface d'entrée/sortie 16 présente en outre un port de sortie 52 pour la transmission de signaux traités vers l'extérieur du dispositif électronique 10. Ces signaux sont dirigés vers le port de sortie 52 depuis les mémoires tampons de sortie des processeurs 40, 42, 44. Le fonctionnement plus détaillé de l'interface d'entrée/sortie 16 est bien connu et ne sera pas davantage décrit.

La mémoire 14 illustrée sur la figure 1 comporte une zone de travail 54 dédiée au stockage de signaux ou données de traitement des processeurs 40, 42 et 44. Elle comporte également éventuellement une zone tampon 56 dédiée au stockage temporaire de valeurs mesurées par les capteurs de l'ensemble 18. En effet, ces valeurs peuvent être transmises directement au gestionnaire 46, mais peuvent aussi, en complément ou en variante, être temporairement stockées dans la zone tampon 56 qui est alors accessible en lecture par le gestionnaire 46.

Conformément à la présente invention, la mémoire 14 comporte en outre une zone de stockage d'au moins une table de correspondance 58 qui, pour chaque paire formée d'une valeur, potentiellement vectorielle, parmi plusieurs valeurs prédéterminées possibles de l'état mesurable du dispositif électronique 10 et d'une valeur, potentiellement vectorielle également, parmi plusieurs valeurs prédéterminées possibles de l'action réglable sur le dispositif électronique 10, attribue au moins une valeur représentative d'une optimisation de la consommation d'énergie électrique, dite valeur de qualité. Il est bien sûr supposé que les nombres de valeurs prédéterminées possibles pour l'état mesurable et pour l'action réglable sont finis. Au plus simple, une seule table de correspondance 58 peut attribuer une valeur de qualité à chaque paire formée d'une valeur d'état mesurable et d'une valeur d'action réglable. Mais compte tenu du fait que les valeurs d'action possibles peuvent être vectorielles, les paramètres scalaires de ces actions pouvant ainsi être optimisés indépendamment les uns des autres, plusieurs tables de correspondance 58 peuvent être définies et stockées : chaque table de correspondance 58 établit alors une correspondance entre les valeurs prédéterminés possibles de l'état mesurable et plusieurs valeurs scalaires prédéterminées possibles portant sur l'un des paramètres de fonctionnement du dispositif électronique 10 pour l'attribution d'une valeur scalaire de qualité à chaque couple constitué d'une valeur prédéterminé possible de l'état mesurable et d'une valeur scalaire prédéterminée possible de ce paramètre de fonctionnement. Dans l'exemple illustré sur la figure 1, trois tables de correspondance différentes peuvent être définies : la première pour régler la puissance du module de refroidissement, la deuxième pour régler la fréquence d'horloge et la troisième pour régler la tension d'alimentation.

On notera que la notion de « table de correspondance » doit être comprise au sens large, c'est-à-dire en tant que système stocké en mémoire 14 de mise en correspondance par paires des valeurs prédéterminées possibles pour l'état mesurable et de celles possibles pour l'action réglable. Elle ne préjuge pas de la façon dont les valeurs de qualité associées à chacune de ces paires sont représentées et stockées en mémoire : sous forme de fichiers texte ou tableur, en une ou plusieurs matrices ou hyper matrices (i.e. matrices de dimensions N>2), en un ou plusieurs tableaux de dimension 2 ou supérieure à 2, etc.

Chaque table de correspondance 58 est exploitée par le gestionnaire 46 et est donc accessible par celui-ci en lecture et écriture pour la mise en œuvre d'une optimisation par apprentissage à exploitation/exploration par le moteur d'apprentissage 48.

A cette fin, le gestionnaire 46 comporte un module fonctionnel d'observation 60 micro programmé ou micro câblé pour, à chaque instant de la pluralité d'instants successifs mentionnée précédemment, observer l'état courant du dispositif électronique 10. En pratique, cela signifie que le module fonctionnel d'observation 60 est conçu pour recevoir à chaque instant les valeurs scalaires des grandeurs physiques mesurées par les capteurs 22, 24, 26, 28, 30 et 32. Il peut les recevoir directement de l'ensemble 18 ou indirectement via la zone tampon 56. A chaque instant t, ces valeurs scalaires forment la valeur d'état précitée, notée s(t), du dispositif électronique 10.

Le gestionnaire 46 comporte en outre un module fonctionnel 62 micro programmé ou micro câblé pour, à chaque instant de la pluralité d'instants successifs mentionnée précédemment, calculer une valeur de récompense r(t) à partir de la valeur d'état s(t) observée par le module fonctionnel 60. La valeur de récompense r(t) peut en outre être calculée à partir de la précédente valeur d'action, notée a(t-1), transmise par le gestionnaire 46 à l'ensemble d'actionneurs 34, 36, 38 pour parvenir à l'état s(t). D'une façon générale, r(t) = F[s(t), a(t-1)], avec F une fonction définie de façon heuristique. Il existe un grand nombre d'exemples de fonctions F dans l'état de la technique, définies en fonction des grandeurs physiques mesurées et/ou des paramètres de fonctionnement sur lesquels on souhaite agir. Un exemple particulièrement simple est donné en partie 4.2 de l'article de Molnos et al précité, ne dépendant que des valeurs de remplissage des mémoires tampons d'arrivée des processeurs 40, 42, 44 de l'unité de calcul 12, c'est-à-dire des valeurs mesurées par le détecteur 28. Il pourrait convenir à un mode de réalisation simple de la présente invention. Plus généralement, l'objectif de la fonction F est de prédéfinir, en fonction du contexte applicatif envisagé, une fonction de récompense visant à optimiser l'accumulation des récompenses r(t) au cours du temps, comme cela est bien connu dans le domaine de l'apprentissage par renforcement. Un grand nombre de fonctions de calcul de cette récompense cumulative pourrait donc convenir pour la présente invention, notamment celles enseignées dans l'état de la technique.

Le moteur d'apprentissage 48 du gestionnaire 46 comporte un module fonctionnel 64 micro programmé ou micro câblé pour, à chaque instant de la pluralité d'instants successifs mentionnée précédemment, mettre à jour chaque table de correspondance 58 à l'aide d'une équation préétablie de mise à jour des valeurs de qualité en fonction des valeurs d'état possibles, des valeurs d'action possibles, de la récompense r(t) calculée par le module fonctionnel 62 et de paramètres propres au moteur d'apprentissage 48, tels que le taux d'apprentissage, généralement noté $\alpha$, et le facteur de réduction, généralement noté $\gamma$, mentionnés précédemment. Un exemple d'équation de mise à jour par récurrence est donné dans l'article de Molnos et al précité. Il est conforme à une méthode simple et efficace d'apprentissage par renforcement appelée « Q-learning », compatible avec la présente invention.

Selon les notations définies précédemment, l'équation de mise à jour peut ainsi prendre la forme suivante :

$$Q_t\big(s(t-1), a(t-1)\big) = \begin{cases} Q_{t-1}\big(s(t-1), a(t-1)\big) \\ + \\ \alpha\left[r(t) + \gamma \max_{a(t)} Q_{t-1}\big(s(t), a(t)\big) - Q_{t-1}\big(s(t-1), a(t-1)\big)\right] \end{cases}$$

où : t est l'instant considéré, $Q_t$ est la table de correspondance considérée telle que mise à jour à l'instant t, $Q_{t-1}$ est la table de correspondance considérée avant sa mise à jour à l'instant t, $s(t$ - 1) est l'état du dispositif électronique à l'instant t-1 à partir duquel la valeur d'action $a(t$ - 1) a permis de parvenir à l'état $s(t)$ observé à l'instant t par le module fonctionnel 60, $r(t) = F[s(t), a(t$ - 1)], et $\max_{a(t)} Q_{t-1}\big(s(t), a(t)\big)$ est la valeur de qualité maximale dans la table de correspondance avant mise à jour $Q_{t-1}$ pour l'état $s(t)$ observé à l'instant t par le module fonctionnel 60.

Cela signifie qu'à chaque instant, il est possible de mettre à jour une valeur de qualité dans chaque table de correspondance considérée : i.e. celle relative à l'état et à l'action qui ont permis de parvenir au dernier état s(t) observé. Au cours du temps, c'est chaque table de correspondance dans sa totalité qui est susceptible d'être continûment mise à jour en fonction de l'historique des états et actions successifs.

La présente invention ne se limite toutefois pas à la méthode de Q-learning précitée, d'autres méthodes d'apprentissage par renforcement connues pouvant convenir, telles que SARSA (de l'anglais « State Action Reward State Action ») par exemple abordée dans l'article de Rummery et al, intitulé « On-line Q-learning using connectionist systems », publié en septembre 1994 par le Cambridge University Engineering Department. D'autres méthodes encore peuvent convenir en fonction des applications visées. A chaque instant t, il est ainsi possible d'une façon générale de mettre à jour au moins une valeur de qualité dans chaque table de correspondance 58 considérée par apprentissage.

Le moteur d'apprentissage 48 du gestionnaire 46 comporte en outre un module fonctionnel 66 micro programmé ou micro câblé pour, à chaque instant de la pluralité d'instants successifs mentionnée précédemment, sélectionner une nouvelle valeur d'action a(t) à transmettre à l'ensemble 20 d'actionneurs 34, 36, 38.

Comme pour une approche $\varepsilon$-gloutonne, le module fonctionnel de sélection 66 est conçu pour choisir sélectivement à chaque instant entre une exploitation de valeurs de qualité mises à jour et une exploration aléatoire dans chaque table de correspondance 58. Le paramètre statistique $\varepsilon$, généralement compris entre 0 et 1, exprime le taux d'explorations à effectuer dans la pluralité d'instants successifs mentionnée précédemment, 1 - $\varepsilon$ exprimant quant à lui le taux d'exploitations à effectuer dans la même pluralité d'instants successifs.

Une exploitation de table de correspondance à un instant t consiste à déterminer la valeur maximale parmi les valeurs de qualité qui ont déjà été mises à jour au moins une fois dans cette table de correspondance et qui sont associées à l'état mesuré s(t), puis à sélectionner la valeur d'action a(t) correspondante. Etant donné que chaque table de correspondance 58 est avantageusement initialisée à des valeurs de qualité minimales, l'exploitation consiste en fait à déterminer la valeur maximale parmi les valeurs de qualité qui sont associées à l'état mesuré s(t) dans chaque table de correspondance. La valeur d'action a(t) sélectionnée est la valeur $\operatorname{Arg}\operatorname*{Max}_{a(t)} Q_t\big(s(t), a(t)\big)$ extraite de la table de correspondance mise à jour.

Une exploration aléatoire de table de correspondance à un instant t consiste à sélectionner aléatoirement une valeur d'action dans cette table de correspondance. Conformément à la présente invention et contrairement à une approche $\varepsilon$-gloutonne, le module fonctionnel de sélection 66 est conçu pour limiter l'exploration aléatoire dans chaque table de correspondance 58 à l'aide d'un paramètre supplémentaire $\Delta$ du moteur d'apprentissage 48. Ce paramètre $\Delta$ exprime une distance exploratoire dans chaque table de correspondance 58, autour d'une valeur d'action pré-sélectionnable dans chaque table de correspondance 58, au-delà de laquelle une valeur d'action ne peut pas être sélectionnée par exploration aléatoire. Cette limitation est illustrée sur la figure 2 dans un exemple de réalisation simple selon lequel la valeur d'action pré-sélectionnable est la valeur $\underset{a(t)}{\text{Arg Max}}\, Q_t\big(s(t), a(t)\big)$ précitée notée $a_j$ qui prend la valeur de qualité maximale MAX dans la ligne $s_i = s(t)$ de la table de correspondance 58 mise à jour. Selon cet exemple simple, le paramètre $\Delta$ est exprimé en nombre entier de colonnes adjacentes dans la table de correspondance 58, les valeurs prédéterminées possibles $a_1$, ..., $a_{j-\Delta}$, ..., $a_j$, ..., $a_{j+\Delta}$, ..., $a_n$ de l'action réglable dans cette table de correspondance étant ordonnées en n colonnes. Plus généralement, la valeur de distance exploratoire $\Delta$ de chaque table de correspondance 58 est exprimée en nombre de lignes ou colonnes adjacentes dans cette table de correspondance 58 selon que les valeurs prédéterminées possibles de l'action réglable y sont ordonnées en lignes ou en colonnes.

On notera que lorsque l'on dispose de plusieurs tables de correspondance en mémoire 14, notamment parce que les valeurs d'action possibles sont vectorielles comme expliqué précédemment, il est possible de définir une distance exploratoire pour chacune d'entre elles. L'exploration aléatoire est alors définie comme la sélection aléatoire d'une valeur scalaire de chaque paramètre de fonctionnement du dispositif électronique 10 dans chaque table de correspondance 58, limitée à une distance exploratoire propre à chaque table de correspondance 58 autour d'une valeur scalaire pré-sélectionnable de chaque paramètre de fonctionnement. Pour rappel, cela ne préjuge pas de la façon dont ces tables de correspondance peuvent être concrètement stockées en mémoire 14. En particulier, elles peuvent se présenter sous la forme d'une seule hyper matrice ou d'un seul tableau de dimension strictement supérieure à 2. De même, le paramètre $\Delta$ peut être défini vectoriellement comme l'action elle-même.

Par ailleurs, dans chaque table de correspondance 58, les valeurs prédéterminées possibles de l'état mesurable du dispositif électronique 10, notées $s_1$, ..., $s_i$, ..., $s_m$ dans la figure 2 et potentiellement vectorielles, sont par exemple ordonnées en lignes successives par ordre monotone (croissant ou décroissant) de valeurs scalaires prédéterminées possibles de l'une des grandeurs physiques mesurables à l'aide de l'ensemble 18 de capteurs 22, 24, 26, 28, 30, 32. Avantageusement, les valeurs scalaires prédéterminées possibles du paramètre de fonctionnement propre à chaque table de correspondance, notées $a_1$, ..., $a_{j-\Delta}$, ..., $a_j$, ..., $a_{j+\Delta}$, ..., $a_n$ dans la figure 2, sont alors respectivement ordonnées en colonnes successives par ordre croissant ou décroissant de leur effet sur les valeurs scalaires ordonnées en lignes dans chaque table de correspondance 58. Ainsi, l'effet non pénalisant de la limite de distance imposée dans chaque table de correspondance 58 pour l'exploration aléatoire est renforcé par la relation de monotonie établie entre les lignes ($s_1$, ..., $s_m$) et les colonnes ($a_1$, ..., $a_n$) de chacune de ces tables. En d'autres termes, lorsqu'une optimisation est globale dans un certain voisinage correctement défini par la valeur de distance exploratoire dans une table de correspondance, alors elle a encore plus de chances d'être globale à l'échelle de la table de correspondance elle-même grâce à cette relation de monotonie parce que la distance exploratoire coopère avec cette relation de monotonie pour produire ses meilleurs effets : elle prend alors tout son sens.

De préférence, on peut choisir judicieusement pour chaque table de correspondance 58 une grandeur physique qui entretient a priori une relation monotone avec le paramètre de fonctionnement propre à cette table. Ainsi, les valeurs scalaires prédéterminées possibles du paramètre de fonctionnement propre à chaque table de correspondance 58 sont ordonnées dans cette table de correspondance par ordre croissant ou décroissant, ce qui assure, par leur effet monotone sur les valeurs scalaires prédéterminées possibles de la grandeur physique judicieusement choisie, la relation de monotonie souhaitée entre les lignes ($s_1$, ..., $s_m$) et les colonnes ($a_1$, ..., $a_n$) de chacune des tables de correspondance.

Une exploration selon l'invention consiste donc à sélectionner la valeur d'action a(t) dans la limite exploratoire imposée par la valeur d'action pré-sélectionnable et le paramètre $\Delta$.

Il en résulte que le module fonctionnel de sélection 66 est conçu pour sélectionner, à chaque instant de la pluralité d'instants successifs mentionnée précédemment, une nouvelle action a(t) en fonction d'un résultat de l'exploitation ou de l'exploration tel que détaillé ci-dessus.

Enfin, le gestionnaire 46 comporte en outre un module fonctionnel 68 micro programmé ou micro câblé pour, à chaque instant de la pluralité d'instants successifs mentionnée précédemment, transmettre la valeur de cette nouvelle action a(t) à l'ensemble 20 d'actionneurs 34, 36, 38 pour un réglage instantané du dispositif électronique 10.

Tout ou partie des éléments constitutifs du gestionnaire 46 de consommation d'énergie électrique peut remplir ses fonctions telles que détaillées précédemment par exécution d'instructions de programmes d'ordinateurs stockées en mémoire 14. Ces instructions peuvent être regroupées selon toutes les combinaisons possibles en un ou plusieurs logiciels. Comme cela a également été indiqué à plusieurs reprises, leurs fonctions peuvent aussi être au moins en partie micro programmées ou micro câblées dans des circuits intégrés dédiés. Ainsi, le gestionnaire 46 de consommation d'énergie électrique peut au moins en partie être implémenté par logiciel, mais il peut aussi être composé uniquement de circuits numériques (sans programme d'ordinateur) pour la réalisation des mêmes actions.

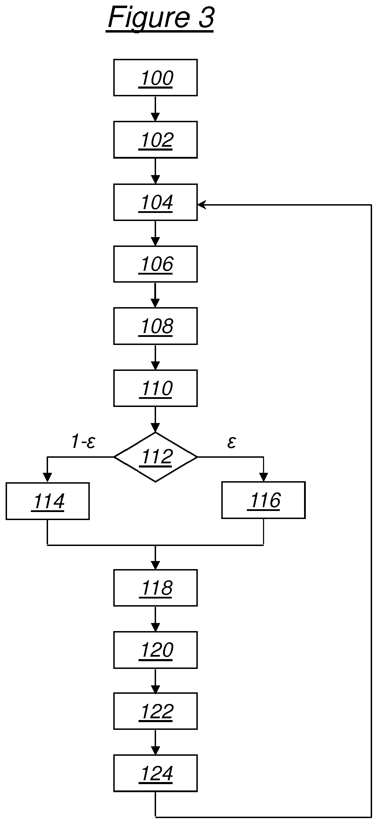

Le fonctionnement du dispositif électronique 10 pour la mise en œuvre d'une optimisation de sa consommation d'énergie électrique va maintenant être décrit en référence à la figure 3.

Au cours d'une première étape d'initialisation 100, chaque table de correspondance 58 est stockée et initialisée en mémoire 14. L'initialisation peut consister à mettre toutes les valeurs de qualité à 0 si elles sont destinées à devenir positives par la suite, ou à d'autres valeurs minimales pouvant influer positivement sur la future convergence vers une adaptation dynamique optimale de la consommation en énergie. Au cours de cette étape également, les paramètres $\alpha$, $\gamma$, $\varepsilon$ et $\Delta$ du moteur d'apprentissage 48 sont initialisés à des valeurs prédéterminées. A titre d'exemple non limitatif, on peut initialiser $\alpha$ et $\gamma$ à 0,2, le ratio $\varepsilon/(1-\varepsilon)$ à 0,8 et $\Delta$ à 2.

Au cours d'une deuxième étape d'initialisation 102, à un premier instant $t_0$ d'une pluralité d'instants t successifs au cours de laquelle les paramètres de fonctionnement du dispositif électronique 10 sont destinés à être réglés continument par des actions successives a(t), un premier état $s(t_0)$ est observé et une première action $a(t_0)$ est définie (i.e. action d'initialisation des paramètres de fonctionnement du dispositif électronique 10).

Ensuite, une boucle d'étapes 104 à 124 est exécutée à chaque instant t de la pluralité d'instants précitée.

Au cours de l'étape 104, l'ensemble 18 de capteurs 22, 24, 26, 28, 30, 32 mesure la valeur courante s(t) de l'état du dispositif électronique 10.

Au cours de l'étape suivante 106, cette valeur d'état s(t) est reçue par le module fonctionnel d'observation 60 qui la transmet au module fonctionnel de calcul 62.

Au cours de l'étape suivante 108, le module fonctionnel 62 calcule la valeur courante de récompense r(t) comme indiqué précédemment.

Au cours de l'étape suivante 110, le moteur d'apprentissage 48 est activé et son module fonctionnel 64 met à jour au moins une valeur de qualité dans chaque table de correspondance 58 à l'aide des valeurs s(t-1), a(t-1), s(t), r(t), des paramètres $\alpha$, $\gamma$ et d'une relation de récurrence telle que celle présentée précédemment sur chacune de ces tables de correspondance 58.

Au cours de l'étape suivante 112, le moteur d'apprentissage 48 choisit entre une exploitation et une exploration aléatoire (limitée par le paramètre $\Delta$) de chaque table de correspondance 58.

Si c'est une exploitation qui est choisie, selon une probabilité 1 - $\varepsilon$, le procédé passe à l'étape 114 d'exploitation de chaque table de correspondance 58 conformément à ce qui a été dit précédemment du fonctionnement du moteur d'apprentissage 48.

Si c'est une exploration aléatoire qui est choisie, selon une probabilité $\varepsilon$, le procédé passe à l'étape 116 d'exploration aléatoire dans chaque table de correspondance 58 conformément à ce qui a été dit précédemment du fonctionnement du moteur d'apprentissage 48, c'est-à-dire avec une limitation de l'exploration aléatoire dans chaque table de correspondance 58 à l'aide du paramètre $\Delta$.

Il résulte de chacune des étapes 114 et 116, la sélection par le module fonctionnel 66 du moteur d'apprentissage 48 d'une nouvelle valeur d'action a(t) au cours de l'étape 118.

Au cours de l'étape suivante 120, le module fonctionnel 68 transmet la valeur de cette nouvelle action a(t) à l'ensemble 20 d'actionneurs 34, 36, 38 pour réglage du dispositif électronique 10 par chacun des actionneurs 34, 36, 38 lors de l'étape 122 suivante.

Enfin, au cours de la dernière étape 124 de la boucle, la question peut se poser de mettre à jour au moins une partie des paramètres $\alpha$, $\gamma$, $\varepsilon$ et $\Delta$ du moteur d'apprentissage 48. En particulier, conformément à la théorie des méthodes d'apprentissage par renforcement, il peut être conseillé de faire décroître progressivement $\alpha$ et $\varepsilon$ vers 0 au cours de la pluralité d'instants précitée. De même, le paramètre $\Delta$ peut être réglable dynamiquement en cours d'exécution du moteur d'apprentissage 48 de manière à augmenter ou réduire la distance exploratoire dans chaque table de correspondance 58. En particulier, $\Delta$ peut être avantageusement graduellement augmenté au fil des instants successifs pendant que $\alpha$ décroît. Cette augmentation graduelle peut en revanche être stoppée si, au cours de plusieurs explorations successives, il n'est pas trouvé de valeur de qualité supérieure à celle qui peut être déterminée par exploitation et autour de laquelle se font les explorations aléatoires limitées, pour prendre acte de la probabilité déclinante de trouver de meilleures valeurs de qualité par exploration lointaine que par exploitation.

Suite à l'étape 124, le procédé revient à l'étape 104 pour une nouvelle exécution de la boucle d'étapes 104 à 124 à l'instant suivant t+1.

Il apparaît clairement qu'un dispositif électronique de traitement de signaux à optimisation intégrée de consommation d'énergie électrique tel que celui décrit précédemment permet une convergence efficace et peu coûteuse en calculs vers une adaptation dynamique optimale de la consommation d'énergie électrique en fonction des variations de traitements effectués au cours du temps.

On notera par ailleurs que l'invention n'est pas limitée au mode de réalisation décrit précédemment. Il apparaîtra en effet à l'homme de l'art que diverses modifications peuvent être apportées au mode de réalisation décrit ci-dessus, à la lumière de l'enseignement qui vient de lui être divulgué.

## Revendications

**1.** Dispositif électronique (10) de traitement de signaux à optimisation intégrée de consommation d'énergie électrique, comportant :

- au moins un capteur (22, 24, 26, 28, 30, 32) conçu pour mesurer, à chacun d'une pluralité d'instants successifs, une valeur d'un état du dispositif électronique (10),
- au moins un actionneur (34, 36, 38) conçu pour régler, à chacun de la pluralité d'instants successifs, une valeur d'une action sur le dispositif électronique (10),
- un bloc matériel (14) de stockage de signaux et données, comportant au moins une table de correspondance (58) qui, pour chaque paire formée d'une valeur parmi plusieurs valeurs prédéterminées possibles ($s_1$, ..., $s_m$) de l'état mesurable et d'une valeur parmi plusieurs valeurs prédéterminées possibles ($a_1$, ..., $a_n$) de l'action réglable, attribue au moins une valeur représentative d'une optimisation de la consommation d'énergie électrique, dite valeur de qualité,
- un bloc matériel (12) de traitement de signaux, comportant un gestionnaire (46) de consommation d'énergie électrique à moteur d'apprentissage par renforcement (48) conçu pour, à chacun de la pluralité d'instants successifs, sur la base de l'état mesuré :

   • mettre à jour (64) au moins une valeur de qualité dans chaque table de correspondance (58), en fonction de cet état mesuré et de l'action de l'instant précédent qui a mené à cet état mesuré,
   • choisir sélectivement (66) entre une exploitation de valeurs de qualité mises à jour et une exploration aléatoire dans chaque table de correspondance (58), l'exploration aléatoire étant définie comme la sélection aléatoire d'une valeur d'action dans chaque table de correspondance (58), selon un paramètre statistique exprimant un taux d'explorations aléatoires à effectuer dans la pluralité d'instants successifs et un taux complémentaire à 1 d'exploitations à effectuer dans la même pluralité d'instants successifs,
   • sélectionner (66) une nouvelle action en fonction d'un résultat de l'exploitation ou de l'exploration, et
   • transmettre (68) la valeur de cette nouvelle action audit au moins un actionneur (34, 36, 38) pour réglage,

**caractérisé en ce que** le moteur d'apprentissage par renforcement (48) présente un paramètre ($\Delta$) de limitation de l'exploration aléatoire qui s'applique lors de son exécution si elle est sélectionnée, c'est-à-dire avant la sélection d'une nouvelle action en fonction du résultat de l'exploitation ou de l'exploration, comportant une valeur de distance exploratoire dans chaque table de correspondance (58), autour d'une valeur d'action pré-sélectionnable (MAX) dans chaque table de correspondance (58), au-delà de laquelle une valeur d'action ne peut pas être sélectionnée par exploration aléatoire.

2. Dispositif électronique (10) de traitement de signaux selon la revendication 1, dans lequel :

   - ledit au moins un capteur (22, 24, 26, 28, 30, 32) est conçu pour mesurer, à chacun de la pluralité d'instants successifs, au moins une valeur scalaire d'au moins une grandeur physique mesurable du dispositif électronique (10), ladite au moins une valeur scalaire formant la valeur de l'état du dispositif électronique,
   - ledit au moins un actionneur (34, 36, 38) est conçu pour régler, à chacun de la pluralité d'instants successifs, au moins une valeur scalaire d'au moins un paramètre de fonctionnement du dispositif électronique (10), ladite au moins une valeur scalaire formant la valeur de l'action sur le dispositif électronique,
   - chaque table de correspondance (58) établit une correspondance entre lesdites valeurs prédéterminés possibles ($s_1$, ..., $s_m$) de l'état mesurable et plusieurs valeurs scalaires prédéterminées possibles ($a_1$, ..., $a_n$) portant sur l'un dudit au moins un paramètre de fonctionnement pour l'attribution d'une valeur scalaire de qualité à chaque couple constitué d'une valeur prédéterminé possible de l'état mesurable et d'une valeur scalaire prédéterminée possible de l'un dudit au moins un paramètre de fonctionnement,
   - l'exploration aléatoire est définie comme la sélection aléatoire d'une valeur scalaire de chaque paramètre de fonctionnement dans chaque table de correspondance (58), et
   - pour chaque table de correspondance (58), la valeur de distance exploratoire est définie autour d'une valeur scalaire pré-sélectionnable ($a_j$) du paramètre de fonctionnement correspondant, au-delà de laquelle une valeur scalaire de paramètre de fonctionnement ne peut pas être sélectionnée par exploration aléatoire.

3. Dispositif électronique (10) de traitement de signaux selon la revendication 2, dans lequel les valeurs prédéterminées possibles de l'état mesurable ($s_1$, ..., $s_m$) sont ordonnées dans chaque table de correspondance (58) par ordre croissant ou décroissant de valeurs scalaires prédéterminées possibles de l'une des grandeurs physiques mesurables, et les valeurs scalaires prédéterminées possibles ($a_1$, ..., $a_n$) portant sur chacun dudit au moins un paramètre de fonctionnement sont respectivement ordonnées dans chaque table de correspondance (58) par ordre croissant ou décroissant de leur effet sur lesdites valeurs scalaires prédéterminées possibles ($s_1$, ..., $s_m$) de l'une des grandeurs physiques mesurables.

4. Dispositif électronique (10) de traitement de signaux selon la revendication 3, dans lequel les valeurs scalaires

prédéterminées possibles ($a_1$, ..., $a_n$) portant sur chacun dudit au moins un paramètre de fonctionnement sont respectivement ordonnées dans chaque table de correspondance (58) par ordre croissant ou décroissant et ont un effet monotone sur lesdites valeurs scalaires prédéterminées possibles ($s_1$, ..., $s_m$) de l'une des grandeurs physiques mesurables.

5. Dispositif électronique (10) de traitement de signaux selon l'une quelconque des revendications 1 à 4, dans lequel la valeur de distance exploratoire de chaque table de correspondance (58) est exprimée en nombre de lignes ou colonnes adjacentes dans cette table de correspondance selon que les valeurs prédéterminées possibles ($a_1$, ..., $a_n$) de l'action réglable dans cette table de correspondance sont ordonnées en lignes ou en colonnes.

6. Dispositif électronique (10) de traitement de signaux selon l'une quelconque des revendications 1 à 5, dans lequel ledit au moins un capteur (22, 24, 26, 28, 30, 32) comporte au moins l'un des éléments de l'ensemble constitué de :

   - un compteur (22) de métrique de performance d'au moins un processeur du bloc matériel (12) de traitement de signaux,
   - un capteur (24) de température,
   - un voltmètre (26) disposé pour la mesure d'une tension d'alimentation,
   - un détecteur (28) de taux de remplissage de mémoires tampons d'entrée/sortie d'au moins un processeur du bloc matériel (12) de traitement de signaux,
   - un capteur (30) de fréquence d'horloge d'au moins un processeur du bloc matériel (12) de traitement de signaux, et
   - un capteur (32) de débit de sortie de messages du dispositif électronique (10).

7. Dispositif électronique (10) de traitement de signaux selon l'une quelconque des revendications 1 à 6, dans lequel ledit au moins un actionneur (34, 36, 38) comporte au moins l'un des éléments de l'ensemble constitué de :

   - un dispositif (34) de réglage de puissance d'un module de refroidissement du dispositif électronique (10),
   - un dispositif (36) de réglage de fréquence d'horloge d'au moins un processeur du bloc matériel (12) de traitement de signaux, et
   - un dispositif (38) de réglage d'une tension d'alimentation du dispositif électronique (10).

8. Procédé d'optimisation d'une consommation d'énergie électrique d'un dispositif électronique (10) de traitement de signaux, comportant les étapes suivantes :

   - mesurer (104) à l'aide d'au moins un capteur (22, 24, 26, 28, 30, 32), à chacun d'une pluralité d'instants successifs, une valeur d'un état du dispositif électronique (10),
   - régler (122) à l'aide d'au moins un actionneur (34, 36, 38), à chacun de la pluralité d'instants successifs, une valeur d'une action sur le dispositif électronique (10),
   - stocker (100), dans un bloc matériel (14) de stockage de signaux et données du dispositif électronique (10), au moins une table de correspondance (58) qui, pour chaque paire formée d'une valeur parmi plusieurs valeurs prédéterminées possibles ($s_1$, ..., $s_m$) de l'état mesurable et d'une valeur parmi plusieurs valeurs prédéterminées possibles ($a_1$, ..., $a_n$) de l'action réglable, attribue au moins une valeur représentative d'une optimisation de la consommation d'énergie électrique, dite valeur de qualité,
   - à chacun de la pluralité d'instants successifs et sur la base de l'état mesuré, activer (110) un moteur d'apprentissage par renforcement (48) d'un gestionnaire (46) de consommation d'énergie électrique d'un bloc matériel (12) de traitement de signaux du dispositif électronique (10), pour :

     • mettre à jour (110) au moins une valeur de qualité dans chaque table de correspondance (58), en fonction de cet état mesuré et de l'action de l'instant précédent qui a mené à cet état mesuré,
     • choisir sélectivement (112) entre une exploitation (114) de valeurs de qualité mises à jour et une exploration aléatoire (116) dans chaque table de correspondance (58), l'exploration aléatoire (116) étant définie comme la sélection aléatoire d'une valeur d'action dans chaque table de correspondance (58), selon un paramètre statistique exprimant un taux d'explorations aléatoires à effectuer dans la pluralité d'instants successifs et un taux complémentaire à 1 d'exploitations à effectuer dans la même pluralité d'instants successifs,
     • sélectionner (118) une nouvelle action en fonction d'un résultat de l'exploitation (114) ou de l'exploration (116), et
     • transmettre (120) la valeur de cette nouvelle action audit au moins un actionneur (34,36, 38) pour réglage,

**caractérisé en ce que**, lorsque l'exploration aléatoire (116) est sélectionnée, elle est limitée par un paramètre (Δ) du moteur d'apprentissage par renforcement (48) lors de son exécution, c'est-à-dire avant la sélection d'une nouvelle action en fonction du résultat de l'exploitation ou de l'exploration, ce paramètre comportant une valeur de distance exploratoire dans chaque table de correspondance (58), autour d'une valeur d'action pré-sélectionnable ($a_j$) dans chaque table de correspondance (58), au-delà de laquelle une valeur d'action ne peut pas être sélectionnée par exploration aléatoire.

9. Procédé d'optimisation d'une consommation d'énergie électrique selon la revendication 8, dans lequel le paramètre (Δ) à valeur de distance exploratoire est réglable dynamiquement en cours d'exécution (124) du moteur d'apprentissage par renforcement (48) de manière à augmenter la distance exploratoire dans chaque table de correspondance (58) au fil des instants successifs pendant qu'un paramètre de taux d'apprentissage de la mise à jour (110) décroît, cette augmentation graduelle étant en revanche stoppée si, au cours de plusieurs explorations aléatoires successives, il n'est pas trouvé de valeur de qualité supérieure à celle qui peut être déterminée par exploitation et autour de laquelle se font les explorations aléatoires successives.

10. Procédé d'optimisation d'une consommation d'énergie électrique selon la revendication 8 ou 9, dans lequel la valeur d'action pré-sélectionnable ($a_j$) dans chaque table de correspondance (58) pour une exécution de l'exploration aléatoire est associée à une valeur maximale (MAX) des valeurs de qualité résultant de la mise à jour (110) dans cette table de correspondance (58).

**Patentansprüche**

1. Elektronische Vorrichtung (10) zur Signalverarbeitung mit integrierter Optimierung eines Verbrauchs von elektrischer Energie, umfassend:

- mindestens einen Sensor (22, 24, 26, 28, 30, 32), der zum Messen eines Werts eines Zustands der elektronischen Vorrichtung (10) zu jedem einer Vielzahl von aufeinanderfolgenden Zeitpunkten entworfen ist,
- mindestens einen Aktor (34, 36, 38), der zum Regeln eines Werts einer Aktion auf die elektronische Vorrichtung (10) zu jedem der Vielzahl von aufeinanderfolgenden Zeitpunkten entworfen ist,
- einen Hardwareblock (14) zur Signal- und Datenspeicherung, umfassend mindestens eine Entsprechungstabelle (58), die jedem Paar, das von einem Wert von mehreren möglichen vorher bestimmten Werten ($s_1$, ..., $s_m$) des messbaren Zustands und einem Wert von mehreren möglichen vorher bestimmten Werten ($a_1$, ..., $a_n$) der regelbaren Aktion gebildet wird, mindestens einen Wert, der eine Optimierung des Verbrauchs von elektrischer Energie darstellt, den so genannten Qualitätswert, zuordnet,
- einen Hardwareblock (12) zur Signalverarbeitung, umfassend einen Verwalter (46) eines Verbrauchs von elektrischer Energie mit einer Verstärkungslern-Engine (48), die zu jedem der Vielzahl von aufeinanderfolgenden Zeitpunkten auf der Basis des gemessenen Zustands entworfen ist zum:

  • Aktualisieren (64) von mindestens einem Qualitätswert in jeder Entsprechungstabelle (58) in Abhängigkeit von diesem gemessenen Zustand und der Aktion des vorhergehenden Zeitpunkts, die zu diesem gemessenen Zustand geführt hat,
  • selektiven Auswählen (66) zwischen einer Nutzung von aktualisierten Qualitätswerten und einer zufälligen Sondierung in jeder Entsprechungstabelle (58), wobei die zufällige Sondierung als die zufällige Auswahl eines Aktionswerts in der Entsprechungstabelle (58) definiert ist, gemäß einem statistischen Parameter, der eine Rate von zufälligen Sondierungen, die in der Vielzahl von aufeinanderfolgenden Zeitpunkten auszuführen sind, und eine komplementäre Rate zu 1 der Sondierungen, die in derselben Vielzahl von aufeinanderfolgenden Zeitpunkten auszuführen sind, ausdrückt,
  • Auswählen (66) einer neuen Aktion in Abhängigkeit von einem Ergebnis der Nutzung oder der Sondierung und
  • Übertragen (68) des Werts dieser neuen Aktion an den mindestens einen Aktor (34, 36, 38) zur Regelung, **dadurch gekennzeichnet, dass** die Verstärkungslern-Engine (48) einen Parameter (Δ) zur Begrenzung der zufälligen Sondierung aufweist, der während ihrer Ausführung gilt, wenn sie ausgewählt wird, d. h. vor der Auswahl einer neuen Aktion in Abhängigkeit von einem Ergebnis der Nutzung oder der Sondierung, umfassend einen Sondierungsabstandswert in jeder Entsprechungstabelle (58) um einen vorher auswählbaren Aktionswert (MAX) in jeder Entsprechungstabelle (58), über den hinaus ein Aktionswert nicht durch zufällige Sondierung ausgewählt werden kann.

**2.** Elektronische Vorrichtung (10) zur Signalverarbeitung nach Anspruch 1, wobei:

- der mindestens eine Sensor (22, 24, 26, 28, 30, 32) zum Messen von mindestens einem skalaren Wert von mindestens einer messbaren physikalischen Größe der elektronischen Vorrichtung (10) zu jedem der Vielzahl von aufeinanderfolgenden Zeitpunkten entworfen ist, wobei der mindestens eine skalare Wert den Wert des Zustands der elektronischen Vorrichtung bildet,

- der mindestens eine Aktor (34, 36, 38) zum Regeln von mindestens einem skalaren Wert von mindestens einem Betriebsparameter der elektronischen Vorrichtung (10) zu jedem der Vielzahl von aufeinanderfolgenden Zeitpunkten entworfen ist, wobei der mindestens eine skalare Wert den Wert der Aktion auf die elektronische Vorrichtung bildet,

- jeder Entsprechungstabelle (58) eine Entsprechung zwischen den möglichen vorher bestimmten Werten ($s_1$, ..., $s_m$) des messbaren Zustands und mehreren möglichen vorher bestimmten skalaren Werten ($a_1$, ..., $a_n$) bezüglich dem einen von dem mindestens einen Betriebsparameter zur Zuordnung eines skalierbaren Qualitätswerts zu jedem Paar, das aus einem möglichen vorher bestimmten Qualitätswert des messbaren Zustands und einem möglichen vorher bestimmten skalaren Wert des einen von dem mindestens einen Betriebsparameter besteht, festlegt,

- die zufällige Sondierung als die zufällige Auswahl eines skalaren Werts jedes Betriebsparameters in jeder Entsprechungstabelle (58) definiert und

- für jede Entsprechungstabelle (58) der Sondierungsabstandswert um einen vorher auswählbaren skalaren Wert ($a_j$) des entsprechenden Betriebsparameters definiert ist, über den hinaus ein skalarer Wert des Betriebsparameters nicht durch zufällige Sondierung ausgewählt werden kann.

**3.** Elektronische Vorrichtung (10) zur Signalverarbeitung nach Anspruch 2, wobei die möglichen vorher bestimmten Werte des messbaren Zustands ($s_1$, ..., $s_m$) in jeder Entsprechungstabelle (58) in aufsteigender oder absteigender Reihenfolge von möglichen vorher bestimmten skalaren Werten von einer der messbaren physikalischen Größen geordnet sind und die möglichen vorher bestimmten skalaren Werte ($a_1$, ..., $a_n$) bezüglich jedem von dem mindestens einen Betriebsparameter jeweils in jeder Entsprechungstabelle (58) in aufsteigender oder absteigender Reihenfolge ihrer Wirkung auf die möglichen vorher bestimmten Werte des messbaren Zustands ($s_1$, ..., $s_m$) von der einen von den messbaren physikalischen Größen geordnet sind.

**4.** Elektronische Vorrichtung (10) zur Signalverarbeitung nach Anspruch 3, wobei die möglichen vorher bestimmten skalaren Werte ($a_1$, ..., $a_n$) bezüglich jedem von dem mindestens einen Betriebsparameter jeweils in jeder Entsprechungstabelle (58) in aufsteigender oder absteigender Reihenfolge geordnet sind und eine monotone Wirkung auf die möglichen vorher bestimmten Werte des messbaren Zustands ($s_1$, ..., $s_m$) von der einen von den messbaren physikalischen Größen haben.

**5.** Elektronische Vorrichtung (10) zur Signalverarbeitung nach einem der Ansprüche 1 bis 4, wobei der Sondierungsabstandswert jeder Entsprechungstabelle (58) als Anzahl von benachbarten Zeilen oder Spalten in dieser Entsprechungstabelle ausgedrückt ist, je nachdem, ob die möglichen vorher bestimmten Werte ($a_1$, ..., $a_n$) der regelbaren Aktion in dieser Entsprechungstabelle in Zeilen oder Spalten geordnet sind.

**6.** Elektronische Vorrichtung (10) zur Signalverarbeitung nach einem der Ansprüche 1 bis 5, wobei der mindestens eine Sensor (22, 24, 26, 28, 30, 32) mindestens eines der Elemente der Menge umfasst, bestehend aus:

- einem Messer (22) einer Leistungsmetrik von mindestens einem Prozessor des Hardwareblocks (12) zur Signalverarbeitung,
- einem Temperatursensor (24),
- einem Spannungsmesser (26), der zur Messung einer Versorgungsspannung eingerichtet ist,
- einem Detektor (28) einer Auslastungsrate von Ein-/Ausgabe-Pufferspeichern von mindestens einem Prozessor des Hardwareblocks (12) zur Signalverarbeitung,
- einem Sensor (30) der Taktfrequenz von mindestens einem Prozessor des Hardwareblocks (12) zur Signalverarbeitung,
- einem Sensor (32) der Nachrichtenausgaberate der elektronischen Vorrichtung (10).

**7.** Elektronische Vorrichtung (10) zur Signalverarbeitung nach einem der Ansprüche 1 bis 6, wobei der mindestens eine Aktor (34, 36, 38) mindestens eines der Elemente der Menge umfasst, bestehend aus:

- einer Vorrichtung (34) zur Regelung einer Leistung eines Kühlmoduls der elektronischen Vorrichtung (10),

- einer Vorrichtung (36) zur Regelung einer Taktfrequenz von mindestens einem Prozessor des Hardwareblocks (12) zur Signalverarbeitung und
- einer Vorrichtung (38) zur Regelung einer Versorgungsspannung der elektronischen Vorrichtung (10).

8. Verfahren zur Optimierung eines Verbrauchs von elektrischer Energie einer elektronischen Vorrichtung (10) zur Signalverarbeitung, umfassend die folgenden Schritte:

- Messen (104) eines Werts eines Zustands der elektronischen Vorrichtung (10) zu jedem einer Vielzahl von aufeinanderfolgenden Zeitpunkten mithilfe mindestens eines Sensors (22, 24, 26, 28, 30, 32),
- Regeln (122) eines Werts einer Aktion auf die elektronische Vorrichtung (10) zu jedem der Vielzahl von aufeinanderfolgenden Zeitpunkten mithilfe mindestens eines Aktors (34, 36, 38),
- Speichern (100) mindestens einer Entsprechungstabelle (58) in einem Hardwareblock (14) zur Signal- und Datenspeicherung, die jedem Paar, das von einem Wert von mehreren möglichen vorher bestimmten Werten $(s_1, ..., s_m)$ des messbaren Zustands und einem Wert von mehreren möglichen vorher bestimmten Werten $(a_1, ..., a_n)$ der regelbaren Aktion gebildet wird, mindestens einen Wert, der eine Optimierung des Verbrauchs von elektrischer Energie darstellt, den so genannten Qualitätswert, zuordnet,
- Aktivieren (110) einer Verstärkungslern-Engine (48) eines Verwalters (46) eines Verbrauchs von elektrischer Energie eines Hardwareblocks (12) zur Signalverarbeitung der elektronischen Vorrichtung (10) zu jedem der Vielzahl von aufeinanderfolgenden Zeitpunkten und auf der Basis des gemessenen Zustands zum:

• Aktualisieren (110) von mindestens einem Qualitätswert in jeder Entsprechungstabelle (58) in Abhängigkeit von diesem gemessenen Zustand und der Aktion des vorhergehenden Zeitpunkts, die zu diesem gemessenen Zustand geführt hat,
• selektiven Auswählen (112) zwischen einer Nutzung (114) von aktualisierten Qualitätswerten und einer zufälligen Sondierung (116) in jeder Entsprechungstabelle (58), wobei die zufällige Sondierung (116) als die zufällige Auswahl eines Aktionswerts in der Entsprechungstabelle (58) definiert ist, gemäß einem statistischen Parameter, der eine Rate von zufälligen Sondierungen, die in der Vielzahl von aufeinanderfolgenden Zeitpunkten auszuführen sind, und eine komplementäre Rate zu 1 der Sondierungen, die in derselben Vielzahl von aufeinanderfolgenden Zeitpunkten auszuführen sind, ausdrückt,
• Auswählen (118) einer neuen Aktion in Abhängigkeit von einem Ergebnis der Nutzung (114) oder der Sondierung (116) und
• Übertragen (120) des Werts dieser neuen Aktion an den mindestens einen Aktor (34, 36, 38) zur Regelung, **dadurch gekennzeichnet, dass**, wenn die zufällige Sondierung (116) ausgewählt wird, sie durch einen Parameter ($\Delta$) der Verstärkungslern-Engine (48) während ihrer Ausführung begrenzt wird, d. h. vor der Auswahl einer neuen Aktion in Abhängigkeit von einem Ergebnis der Nutzung oder der Sondierung, wobei dieser Parameter einen Sondierungsabstandswert in jeder Entsprechungstabelle (58) um einen vorher auswählbaren Aktionswert ($a_j$) in jeder Entsprechungstabelle (58) umfasst, über den hinaus ein Aktionswert nicht durch zufällige Sondierung ausgewählt werden kann.

9. Verfahren zur Optimierung eines Verbrauchs von elektrischer Energie nach Anspruch 8, wobei der Parameter ($\Delta$) mit Sondierungsabstandswert während der Ausführung (124) der Verstärkungslern-Engine (48) dynamisch regelbar ist, um den Sondierungsabstand in jeder Entsprechungstabelle (58) im Verlauf von aufeinanderfolgenden Zeitpunkten, während derer eine Lernrate der Aktualisierung (110) abnimmt, zu erhöhen, wobei diese allmähliche Erhöhung wiederum gestoppt wird, wenn im Laufe von mehreren aufeinanderfolgenden zufälligen Sondierungen kein Qualitätswert gefunden wird, der höher als der ist, der durch Nutzung bestimmt werden kann und um den sich die aufeinanderfolgenden zufälligen Sondierungen befinden.

10. Verfahren zur Optimierung eines Verbrauchs von elektrischer Energie nach Anspruch 8 oder 9, wobei der vorher auswählbare Aktionswert ($a_j$) in jeder Entsprechungstabelle (58) für eine Ausführung der zufälligen Sondierung mit einem maximalen Wert (MAX) von Qualitätswerten assoziiert ist, die aus der Aktualisierung (110) in dieser Entsprechungstabelle (58) resultieren.

**Claims**

1. An electronic device (10) for signal processing with embedded optimization of electrical energy consumption, comprising:

- at least one sensor (22, 24, 26, 28, 30, 32) designed to measure, at each of a plurality of successive times, a state value of the electronic device (10),
- at least one actuator (34, 36, 38) designed to adjust, at each of the plurality of successive times, an action value on the electronic device (10),
- hardware (14) for signal and data storage, comprising at least one correspondence table (58) that, for each pair formed by one of several possible predetermined values ($s_1$, ..., $s_m$) of the measurable state and one of several possible predetermined values ($a_1$, ..., $a_n$) of the adjustable action, assigns at least one value representing an optimization of the electrical energy consumption, referred to as a quality value,
- signal processing hardware (12), comprising an electrical energy consumption manager (46) with a reinforcement learning engine (48) designed, at each of the plurality of successive times, on the basis of the measured state, to:

  • update (64) at least one quality value in each correspondence table (58), on the basis of said measured state and the action of the preceding time that led to said measured state,
  • selectively choose (66) between an exploitation of updated quality values and a random exploration in each correspondence table (58), the random exploration being defined as the random selection of an action value in each correspondence table (58), according to a statistical parameter expressing a rate of random explorations to be performed in the plurality of successive times and a rate complementary to 1 of exploitations to be performed in the same plurality of successive times,
  • select (66) a new action on the basis of a result of the exploitation or the exploration, and
  • transmit (68) the value of said new action to said at least one actuator (34, 36, 38) for adjustment,

  **characterized in that** the reinforcement learning engine (48) has a parameter ($\Delta$) for limiting the random exploration which applies during its execution if it is selected, i.e. before the selection of a new action as a function of the result of the exploitation or exploration, comprising an exploration distance value in each correspondence table (58), around a pre-selectable action value (MAX) in each correspondence table (58), beyond which an action value cannot be selected by random exploration.

2. The electronic device (10) for signal processing according to claim 1, wherein:

   - said at least one sensor (22, 24, 26, 28, 30, 32) is designed to measure, at each of the plurality of successive times, at least one scalar value of at least one measurable physical quantity of the electronic device (10), said at least one scalar value forming the state value of the electronic device,
   - said at least one actuator (34, 36, 38) is designed to adjust, at each of the plurality of successive times, at least one scalar value of at least one operating parameter of the electronic device (10), said at least one scalar value forming the action value on the electronic device,
   - each correspondence table (58) establishes a correspondence between said possible predetermined measurable state values ($s_1$, ..., $s_m$) and a plurality of possible predetermined scalar values ($a_1$, ..., $a_n$) concerning one of said at least one operating parameter for the assignment of a scalar quality value to each pair consisting of a possible predetermined measurable state value and a possible predetermined scalar value of one of said at least one operating parameter(s),
   - the random exploration is defined as being the random selection of a scalar value of each operating parameter in each correspondence table (58), and
   - for each correspondence table (58), the exploration distance value is defined around a pre-selectable scalar value ($a_j$) of the corresponding operating parameter, beyond which an operating parameter scalar value cannot be selected by random exploration.

3. The electronic device (10) for signal processing according to claim 2, wherein the possible predetermined measurable state values ($s_1$, ..., $s_m$) are ordered in each correspondence table (58) in increasing or decreasing order of predetermined possible scalar values of one of the measurable physical quantities, and the possible predetermined scalar values ($a_1$, ..., $a_n$) concerning each of said at least one operating parameter are respectively ordered in each correspondence table (58) in increasing or decreasing order of their effect on said possible predetermined scalar values ($s_1$, ..., $s_m$) of one of the measurable physical quantities.

4. The electronic device (10) for signal processing according to claim 3, wherein the possible predetermined scalar values ($a_1$, ..., $a_n$) concerning each of said at least one operating parameter are respectively ordered in each correspondence table (58) in increasing or decreasing order and have a monotonic effect on said possible predetermined scalar values ($s_1$, ..., $s_m$) of one of the measurable physical quantities.

5. The electronic device (10) for signal processing according to any one of claims 1 to 4, wherein the exploration distance value of each correspondence table (58) is expressed as a number of adjacent rows or columns in said correspondence table depending on whether the predetermined possible values ($a_1$, ..., $a_n$) of the adjustable action in said correspondence table are ordered in rows or in columns.

6. The electronic device (10) for signal processing according to any one of claims 1 to 5, wherein said at least one sensor (22, 24, 26, 28, 30, 32) comprises at least one of the elements of the group consisting of:

- a performance metric counter (22) of at least one processor of the signal processing hardware (12),
- a temperature sensor (24),
- a voltmeter (26) arranged to measure a power supply voltage,
- a detector (28) of the fill rate of input/output buffer memories of at least one processor of the signal processing hardware (12),
- a sensor (30) of the clock frequency of at least one processor of the signal processing hardware (12), and
- a sensor (32) of the message output rate of the electronic device (10).

7. The electronic device (10) for signal processing according to any one of claims 1 to 6, wherein said at least one actuator (34, 36, 38) comprises at least one of the elements of the group consisting of:

- a device (34) for adjusting the power of a module for cooling the electronic device (10),
- a device (36) for adjusting the clock frequency of at least one processor of the signal processing hardware (12), and
- a device for adjusting (38) a power supply voltage of the electronic device (10).

8. A method for optimizing the electrical energy consumption of an electronic device (10) for signal processing, comprising the following steps:

- measuring (104) by means of at least one sensor (22, 24, 26, 28, 30, 32), at each of a plurality of successive times, a state value of the electronic device (10),
- adjusting (122) by means of at least one actuator (34, 36, 38), at each of the plurality of successive times, an action value on the electronic device (10),
- storing (100), in signal and data storage hardware (14) of the electronic device (10), at least one correspondence table (58) that, for each pair formed by one of several possible predetermined values ($s_1$, ..., $s_m$) of the measurable state and one of several possible predetermined values ($a_1$, ..., $a_n$) of the adjustable action, assigns at least one value representing an optimization of the electrical energy consumption, referred to as a quality value,
- at each of the plurality of successive times and on the basis of the measured state, activating (110) a reinforcement learning engine (48) of an electrical energy consumption manager (46) of signal processing hardware (12) of the electronic device (10), in order to:

  • update (110) at least one quality value in each correspondence table (58), on the basis of said measured state and the action of the preceding time that led to said measured state,
  • selectively choose (112) between an exploitation (114) of updated quality values and a random exploration (116) in each correspondence table (58), the random exploration (116) being defined as the random selection of an action value in each correspondence table (58), according to a statistical parameter expressing a rate of random explorations to be performed in the plurality of successive times and a rate complementary to 1 of exploitations to be performed in the same plurality of successive times,
  • select (118) a new action on the basis of a result of the exploitation (114) or the exploration (116), and
  • transmit (120) value of said new action to said at least one actuator (34, 36, 38) for adjustment,

**characterized in that**, when the random exploration (116) is selected, it is limited by a parameter ($\Delta$) of the reinforcement learning engine (48) during its execution, i.e. before the selection of a new action according to the result of the exploitation or exploration, said parameter comprising an exploration distance value in each correspondence table (58), around a pre-selectable action value ($a_j$) in each correspondence table (58), beyond which an action value cannot be selected by random exploration.

9. The method for optimizing electrical energy consumption according to claim 8, wherein the exploration distance value parameter ($\Delta$) is dynamically adjustable during execution (124) of the reinforcement learning engine (48) so as to increase the exploration distance in each correspondence table (58) during the successive times while a learning rate parameter of the update (110) decreases, this gradual increase being on the other hand stopped if, in the course of several successive random explorations, no higher quality value is found than that which can be determined by exploitation and around which the successive random explorations are performed.

10. The method for optimizing electrical energy consumption according to claim 8 or 9, wherein the pre-selectable action value ($a_j$) in each correspondence table (58) for a random exploration execution is associated with a maximum value (MAX) of the quality values resulting from the update (110) in this correspondence table (58).

## Figure 1

## Figure 2

# Figure 3

```
        ┌──────────┐
        │   100    │
        └────┬─────┘
             ▼
        ┌──────────┐
        │   102    │
        └────┬─────┘
             ▼
        ┌──────────┐
        │   104    │◄─────────────────┐
        └────┬─────┘                  │
             ▼                        │
        ┌──────────┐                  │
        │   106    │                  │
        └────┬─────┘                  │
             ▼                        │
        ┌──────────┐                  │
        │   108    │                  │
        └────┬─────┘                  │
             ▼                        │
        ┌──────────┐                  │
        │   110    │                  │
        └────┬─────┘                  │
             ▼                        │
  1-ε      ╱◇╲       ε                │
  ┌───────╱ 112 ╲───────┐            │
  ▼       ╲   ╱         ▼            │
┌──────┐   ╲╱        ┌──────┐         │
│ 114  │            │ 116  │         │
└───┬──┘            └───┬──┘         │
    └────────┬──────────┘            │
             ▼                        │
        ┌──────────┐                  │
        │   118    │                  │
        └────┬─────┘                  │
             ▼                        │
        ┌──────────┐                  │
        │   120    │                  │
        └────┬─────┘                  │
             ▼                        │
        ┌──────────┐                  │
        │   122    │                  │
        └────┬─────┘                  │
             ▼                        │
        ┌──────────┐                  │
        │   124    │                  │
        └────┬─────┘                  │
             └────────────────────────┘
```

## RÉFÉRENCES CITÉES DANS LA DESCRIPTION

**Littérature non-brevet citée dans la description**

- **MOLNOS et al.** Investigation of Q-learning applied to DVFS management of a System-on-Chip. *IFAC-PapersOnLine,* 2016, vol. 49-5, 278, , 284

- **RUMMERY et al.** On-line Q-learning using connectionist systems. Cambridge University Engineering Department, Septembre 1994